# EUROPEAN PATENT SPECIFICATION

(11) **EP 4 246 282 B1**
(45) Date of publication and mention of the grant of the patent: **23.09.2026**
(21) Application number: 23160341.6
(22) Date of filing: 07.03.2023
(51) Int. Cl.: G06F 1/16, G06F 3/01

(54) **INFORMATION PROCESSING APPARATUS, INFORMATION PROCESSING SYSTEM, AND INFORMATION PROCESSING METHOD**
INFORMATIONSVERARBEITUNGSVORRICHTUNG, INFORMATIONSVERARBEITUNGSSYSTEM UND INFORMATIONSVERARBEITUNGSVERFAHREN
APPAREIL DE TRAITEMENT D'INFORMATIONS, SYSTÈME DE TRAITEMENT D'INFORMATIONS ET PROCÉDÉ DE TRAITEMENT D'INFORMATIONS

(30) Priority: 16.03.2022 JP 2022041753
(43) Date of publication of application: 20.09.2023
(73) Proprietor: Ricoh Company, Ltd., Tokyo 143-8555 (JP)
(72) Inventor: Shimizu, Kanta, Tokyo, 143-8555 (JP); Satoh, Hiroyuki, Tokyo, 143-8555 (JP); Nakamura, Naoto, Tokyo, 143-8555 (JP); Ogata, Koretaka, Tokyo, 143-8555 (JP)
(74) Representative: Marks & Clerk LLP

(56) References cited:
- US-A1- 2018 373 291
- US-A1- 2019 121 522
- US-A1- 2021 117 680
- CHRISTIAN WINKLER ET AL: "Pervasive information through constant personal projection", PROCEEDINGS OF THE SIGCHI CONFERENCE ON HUMAN FACTORS IN COMPUTING SYSTEMS, ACM, 2 PENN PLAZA, SUITE 701 NEW YORK NY 10121-0701 USA, 26 April 2014 (2014-04-26), pages 4117 - 4126, XP058046895, ISBN: 978-1-4503-2473-1, DOI: 10.1145/2556288.2557365
- OLIVER BIMBER ET AL: "The visual computing of projector-camera systems", 20080811; 20080811 - 20080815, 11 August 2008 (2008-08-11), pages 1 - 25, XP058345205, DOI: 10.1145/1401132.1401239

## Description

### BACKGROUND

### Technical Field

Embodiments of the present disclosure relate to an information processing apparatus, an information processing system, and an information processing method.

### Related Art

Various augmented reality (AR) glasses have been developed in recent years. Such AR glasses are an example of a wearable device worn to be used by a user. The user wearing the AR glasses can visually recognize digital information superimposed and displayed on a transparent display while visually recognizing information of real world (real world information) on the transparent display.

For example, Japanese Patent No. 6306985 describes a glasses-type wearable device having the shape of glasses. The wearable device acquires information on a position corresponding to an estimated point at which a user gazes at and displays the information on a monitor near the eyes of the user.

However, in the AR glasses, the user concentrates on the digital information superimposed and displayed on the transparent display. Due to this, the user may miss the information in the real world. From this point of view, a technique to allow a user to easily and visually recognize both real world information and digital information is convenient.

Christian Winkler et al: "Pervasing information through constant personal projection", Proccedings of the Sigchi Conference on Human Factors in Computing System, ACM, 2 Penn Plaza, Suite 701 New York NY 10121-0701 USA, 26 April 2014, pages 4177-4126 discloses an "ambient mobile pervasive display" which is a wearable projector system that constantly projects am ambient information display in front of the user, on the floor or on the user's hand.

US 2021/117680 A1 discloses wearable multimedia devices including a camera, depth sensor, and a laser projection system for projecting data onto surfaces around the user.

US 2018/373291 A1 discloses a support system for displaying a projected image at a specified position and correcting the position in real-time based on an estimated positional relationship of the projection device and a work site.

"The visual computing of projector-camera systems" by Oliver Bimber et al. discloses real-time image correction techniques that enable projector-camera systems to display images onto screens that are not optimized for projections.

### SUMMARY

The invention is set out in the appended set of claims.

According to an embodiment of the present disclosure, real world information and digital information are provided in a manner that the real world information and the digital information are easily recognized and distinguished from each other by a user.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of an overview of an exemplary embodiment of the disclosure;
FIGS. 2A and 2B are block diagrams each illustrating an example of a configuration of an information processing system according to the exemplary embodiment of the disclosure;
FIG. 3 is a block diagram illustrating an example of a hardware configuration of a wearable device according to the exemplary embodiment of the disclosure;
FIG. 4 is a block diagram illustrating an example of a hardware configuration of a computer according to the exemplary embodiment of the disclosure;
FIG. 5 is a block diagram illustrating an example of a functional configuration of the information processing system according to the exemplary embodiment of the disclosure;
FIG. 6 is a block diagram illustrating another example of a functional configuration of the information processing system according to the exemplary embodiment of the disclosure;
FIG. 7 is a block diagram illustrating still another example of a functional configuration of the information processing system according to the exemplary embodiment of the disclosure;
FIG. 8 is a flowchart illustrating an example of a process performed by the information processing system according to the exemplary embodiment of the disclosure;
FIG. 9 is a flowchart illustrating another example of a process performed by the information processing system according to the exemplary embodiment of the disclosure;
FIG. 10 is a flowchart illustrating an example of a process of projecting projection information onto a projection destination having high visibility according to the exemplary embodiment of the disclosure;
FIG. 11 is a diagram illustrating an example of an overview of an assist system for assisting inspection work according to an exemplary embodiment of the disclosure;
FIG. 12 is a flowchart illustrating an example of a process performed by the assist system that assists the inspection work, according to the exemplary embodiment of the disclosure;
FIG. 13 is a diagram illustrating an example of an overview of an assist system for assisting an operation at a construction site, according to an exemplary embodiment of the disclosure;
FIG. 14 is a flowchart illustrating an example of a process performed by the assist system that assists work at the construction site according to the exemplary embodiment of the disclosure;
FIG. 15 is a diagram illustrating an example of an overview of an assist system as a guide for sightseeing, according to an exemplary embodiment of the disclosure; and
FIG. 16 is a flowchart illustrating an example of a process performed by the assist system that assists as a sightseeing guide according to the exemplary embodiment of the disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An exemplary embodiment of the present disclosure is described below with reference to the attached drawings.

### Overview

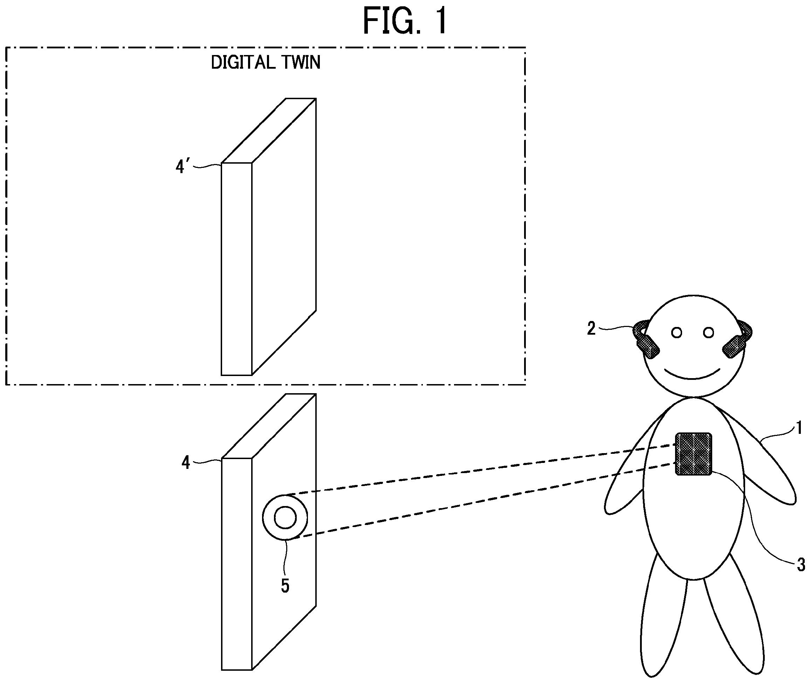

FIG. 1 is a diagram illustrating an example of an overview of the present embodiment. A user 1 wears one or more wearable devices. In the example of FIG. 1, the user 1 wears a head wearable device 2 and a body wearable device 3. FIG. 1 illustrates the present embodiment in which the user 1 wears two wearable devices as an example. In some embodiments, the user wears one wearable device or three or more wearable devices. For example, the head wearable device 2 and the body wearable device 3 may be integrated.

The head wearable device 2 acquires information on a position of the user 1. The head wearable device 2 is a device worn by a user on his or her head or a part of his or her head, and may have a device form to be worn by a user on his or her ear. The head wearable device 2 has a function of capturing a surrounding image of the user 1, a function of measuring a posture and a change in the posture of the user 1, a function of an electrooculography sensor that measures a direction of line of sight of the user 1, and a global positioning system (GPS) function, for example. The surrounding image of the user 1 is an image of surrounding of the user 1.

The body wearable device 3 acquires digital information from a storage device based on the information on the position of the user 1. The digital information is used to get the attention of the user 1 and is visually recognized by the user 1, accordingly. The body wearable device 3 is a device worn by a user on his or her body or a part of his or her body, or torso, and may have a device form to be worn by a user on his or her chest.

The digital information that is to get attention of the user 1 and is visually recognized by the user 1 is included in information of digitalized real world, called a Digital Twin. Such information of digitalized real world may be referred to as digitized real world information. The digital information that is to get attention of the user 1 and is visually recognized by the user 1 is, for example, information associated with information on the position of the user 1 in the Digital Twin.

The body wearable device 3 acquires projection destination information that is information on a projection destination 4 onto which the acquired digital information is to be projected. The projection destination includes an object on which the information is projected. For example, in the Digital Twin, information 4' that is information related to the projection destination 4 in the real world is stored in association with the information on the position of the user 1. The body wearable device 3 has a projection function such as a projector, and projects a projection information 5, which is imaged, onto the projection destination 4 in the real world.

The projection information 5 projected onto the projection destination 4 by the projector included in the body wearable device 3 in the real world is, for example, augmented reality (AR) information such as a mark indicating an object or a target place that the user 1 is desired to be caused to visually recognize in the real world as illustrated in FIG. 1. The projection information 5 projected onto the projection destination 4 in the real world by the projector included in the body wearable device 3 may be AR information such as information that is desired to be visually recognized by the user 1.

As illustrated in FIG. 1, in the present embodiment, the projector included in the wearable device worn by the user 1 projects the projection information 5 onto the projection destination 4 in the real world, thereby the AR information can be displayed in the real world.

For example, in a case of displaying AR information by AR glasses, the AR information is superimposed and displayed on a transparent display with which information of real world is visually recognized, and this may cause unnaturalness. In addition, in the display of the AR information by the AR glasses, a part of the five senses of the user 1 may be disturbed.

In the present embodiment, as compared with the display of AR information by such the AR glasses, the AR information is provided in a manner that the user 1 can easily notice the AR information, and the user 1 can visually recognize the AR information, accordingly. In addition, according to the present embodiment, by projecting the projection information 5 onto the projection destination 4, the AR information can be displayed in the real world in a manner that the AR information can be visually recognized by another person other than the user 1 wearing the wearable device.

### System Configuration

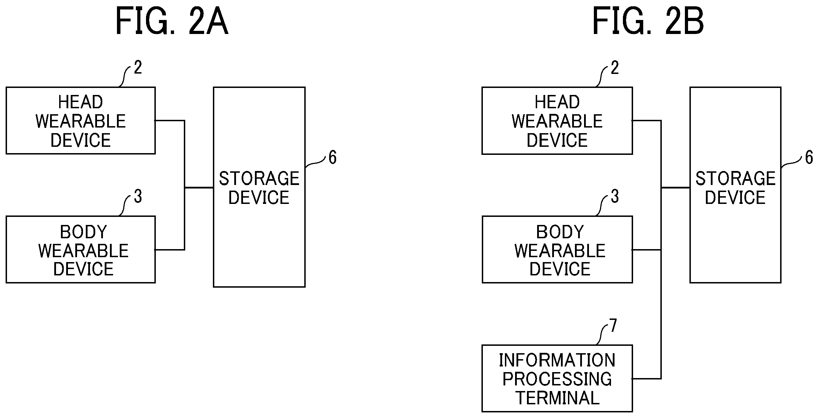

FIGS. 2A and 2B are diagrams each illustrating an example of a configuration of an information processing system according to the present embodiment. The example of FIG. 2A illustrates a system configuration that includes the head wearable device 2, the body wearable device 3, and a storage device 6 that are connected to each other so as to establish data communication. The example of FIG. 2B illustrates a system configuration that includes the head wearable device 2, the body wearable device 3, the storage device 6, and an information processing terminal 7 that are connected to each other so as to establish data communication.

The head wearable device 2 and the body wearable device 3 are substantially the same as those illustrated in FIG. 1. The storage device 6 stores information used for displaying AR information including information of digitized real world that is referred to as a Digital Twin, for example. The storage device 6 may be included in the head wearable device 2 or may be included in the body wearable device 3. The storage device 6 may be implemented by a cloud, or may be included in a personal computer (PC).

The information processing terminal 7 is owned by the user 1 and includes a PC, a mobile phone, a smartphone, a tablet terminal, a game machine, and a personal digital assistant (PDA). The storage device 6 may be included in the information processing terminal 7. In addition, the information processing terminal 7 may implement at least a part of the functions of the head wearable device 2 or the body wearable device 3. In addition, a part of the functions of the head wearable device 2 or the body wearable device 3 may be implemented by a cloud.

### Hardware Configuration

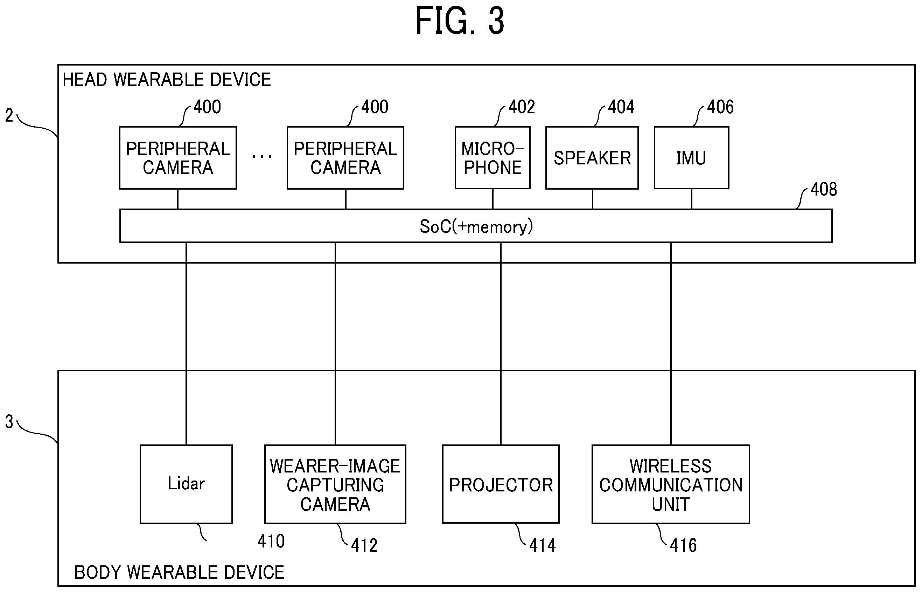

FIG. 3 is a block diagram illustrating an example of a hardware configuration of a wearable device according to the present embodiment. The example of FIG. 3, the wearable device worn by the user 1 includes the head wearable device 2 and the body wearable device 3 that are separated from each other. However, this is not limiting of the disclosure, and in some embodiments, a configuration of the wearable device may be divided into three or more devices or may be integrated into one device.

The head wearable device 2 includes a plurality of peripheral cameras 400, a microphone 402, a speaker 404, an inertial measurement unit (IMU) 406, and a system-on-a-chip (SoC) 408. The body wearable device 3 includes a Lidar 410, a wearer-image capturing camera 412, a projector 414, and a wireless communication unit 416.

The peripheral camera 400 is an example of an image capturing unit that captures a surrounding image of the user 1, and includes, for example, a lens and an imaging element. The surrounding image of the user 1 is an image of surrounding of the user 1. As such the peripheral camera 400, for example, a digital camera that can obtain a 360-degree full spherical image, or an omnidirectional panoramic image by one shot may be used. The peripheral camera 400 is used to obtain information used for environment recognition and position estimation. For the position estimation, visual simultaneous localization and mapping (VSLAM) can be used. The VSLAM is a technique for performing self-localization and environment map creation based on a surrounding image.

The microphone 402 collects the ambient sound of the user 1 and voice of the user 1. The speaker 404 outputs a voice guide to the user 1 or notifies the user 1 of a warning sound, for example. The microphone 402 and the speaker 404 are used according to a usage scene, for example, when the user 1 exchanges information with an assistant by voice, or when the user 1 receives notification by a warning sound.

The IMU 406 is an inertial measurement unit that measures a posture of the user 1 wearing the head wearable device 2 and changes in the posture. The IMU 406 measures a change in the orientation of the head (face direction) of the user 1 wearing the head wearable device 2. For example, the change in the orientation of the head of the user 1 can be used to estimate an amount of movement by calculating the number of steps based on an amount of vertical movement of the orientation of the head of the user 1. In addition, the change in the orientation of the head of the user 1 can be used to estimate a degree of concentration of the user 1 based on an amount of change in the orientation of the head of the user 1 in the vertical and horizontal directions.

The Lidar 410 is provided with a light emitting unit and a light receiving unit, and measures a shape of an object or a distance to the object by remote sensing using light. The Lidar 410 obtains, in real time, distance information and surface information that are information on a distance and a surface with respect to changes in the posture of the user 1 or changes in the positional relationship between the user 1 and the projection destination 4. For example, a change in the posture of the user 1 or a change in the positional relationship with the projection destination 4 can be used for accurate dynamic mapping of the projection information 5 onto the projection destination 4. For dynamic mapping of the projection information 5 onto the projection destination 4, real time correction may be performed based on the surrounding image of the user 1 captured by the peripheral camera 400.

The wearer-image capturing camera 412 is an example of an image capturing unit that captured an image of the user 1 and includes, for example, a lens and an imaging element. For example, an image of the face of the user 1 captured by the wearer-image capturing camera 412 can be used for estimation for a state of the user 1 including a careless state and a concentration state, or estimation for a line of sight of the user 1. In addition, the accuracy of the line-of-sight estimation can be improved by multiplication with information measured by the IMU 406.

The projector 414 is an example of a projection unit that projects the projection information 5 onto the projection destination 4, and includes, for example, a lens and a light emitting unit. The projector 414 performs projection using a laser and a projection direction shift mechanism (MEMS). The projector 414 can correct positional shift of a projection position using a mirror angle of the MEMS based on the surrounding image and the information measured by the Lidar 410. The wireless communication unit 416 performs data communication with the storage device 6 and the information processing terminal 7, for example. The wireless communication unit 416 may be provided to the head wearable device 2.

The SoC 408 includes, for example, a CPU, a memory, a peripheral IF circuits, and an artificial intelligence (AI) accelerator. The SoC 408 is connected to the plurality of peripheral cameras 400, the microphone 402, the speaker 404, the IMU 406, the Lidar 410, the wearer-image capturing camera 412, the projector 414, and the wireless communication unit 416 so that data can be communicated, and performs various processes, which are described later, for projecting the projection information 5 on the projection destination 4.

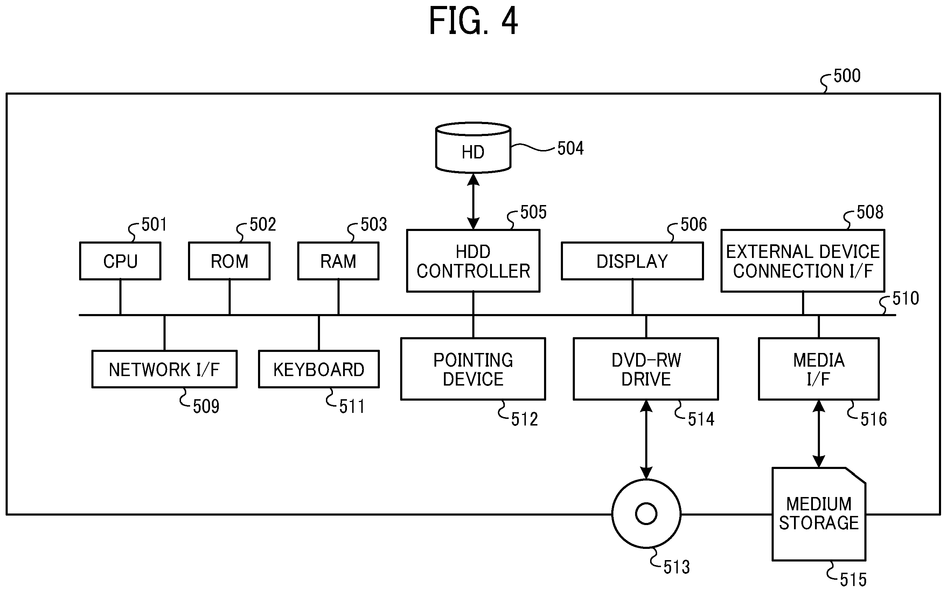

The storage device 6 may be mounted on the wearable device having the hardware configuration illustrated in FIG. 3. In addition, the storage device 6 may be implemented in, for example, a computer 500 having a hardware configuration as illustrated in FIG. 4 or the computer 500 having the hardware configuration as illustrated in FIG. 4 on a cloud. FIG. 4 is a block diagram illustrating an example of a hardware configuration of a computer according to the present embodiment. When the information processing terminal 7 is a PC, the hardware configuration is as illustrated in FIG. 4.

The computer 500 includes a central processing unit (CPU) 501, a read only memory (ROM) 502, a random access memory (RAM) 503, a hard disk (HD) 504, a hard disk drive (HDD) controller 505, a display 506, an external device connection interface (I/F) 508, a network I/F 509, a data bus 510, a keyboard 511, a pointing device 512, a digital versatile disk rewritable (DVD-RW) drive 514, and a media I/F 516.

The CPU 501 is a processor that performs overall control of the computer 500 according to a program. The ROM 502 stores programs such as an initial program loader (IPL) to boot the CPU 501. The RAM 503 is used as a work area for the CPU 501. The HD 504 stores various data such as a program. The HDD controller 505 controls reading and writing of various data from and to the HD 504 under control of the CPU 501.

The display 506 displays various information such as a cursor, a menu, a window, a character, or an image. The external device connection I/F 508 is an interface for connecting various external devices. The external device in this case is, for example, a Universal Serial Bus (USB) memory. The network I/F 509 is an interface for data communication using a network. Examples of the data bus 510 include, but not limited to, an address bus and a data bus that electrically connect the components, such as the CPU 501, with one another.

The keyboard 511 is one example of an input device provided with a plurality of keys for allowing a user to input characters, numerals, or various instructions. The pointing device 512 is an example of an input device that allows a user to select or execute a specific instruction, select a target for processing, or move a cursor being displayed. The DVD-RW drive 514 reads and writes various data from and to a DVD-RW 513, which is an example of a removable recording medium. The removable storage medium is not limited to the DVD-RW and may be a Digital Versatile Disc-Recordable (DVD-R) or the like. The media I/F 516 controls reading and writing (storing) of data from and to a storage medium 515, such as a flash memory.

The hardware configuration illustrated in FIG. 4 is just one example, and the hardware configuration may not include all of the hardware components illustrated in FIG. 4, or may include any other hardware components than the ones illustrated in FIG. 4. There are various hardware configurations in a case where the information processing terminal 7 of FIG. 2 is other than a PC, and diagrams of the hardware configurations in such a case are omitted.

### Functional Configuration

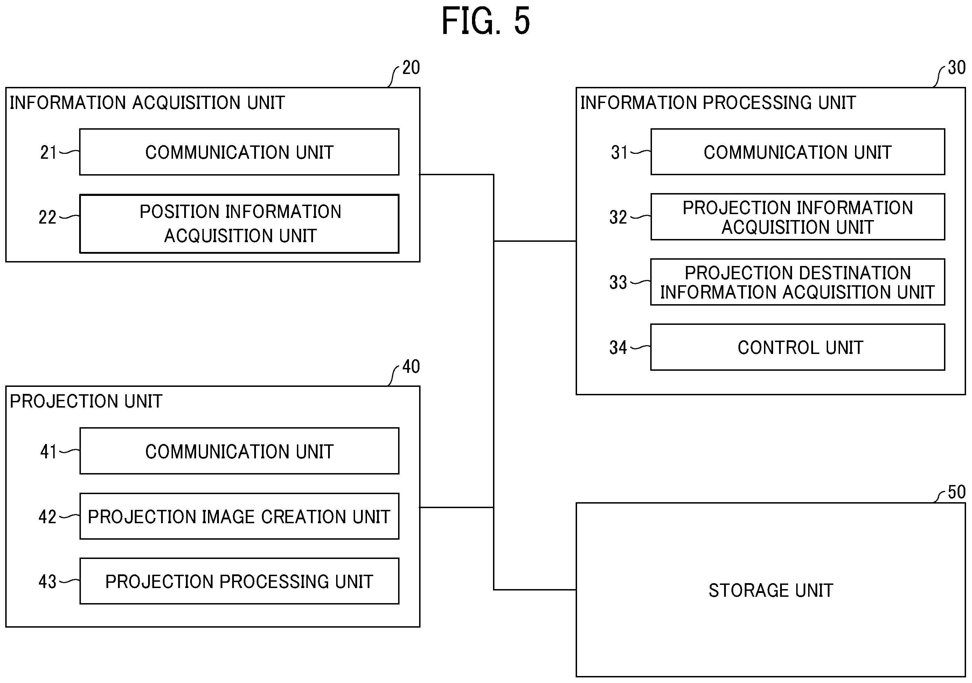

FIGS. 5 to 7 are diagrams each illustrating an example of a functional configuration of the information processing system according to the present embodiment. The information processing system according to the present embodiment includes an information acquisition unit 20, an information processing unit 30, a projection unit 40, and a storage unit 50. The information acquisition unit 20, the information processing unit 30, the projection unit 40, and the storage unit 50 illustrated in FIGS. 5 to 7 are implemented by the head wearable device 2, the body wearable device 3, and the storage device 6 illustrated in FIG. 2 operating in cooperation with various programs. Alternatively, the information acquisition unit 20, the information processing unit 30, the projection unit 40, and the storage unit 50 illustrated in FIGS. 5 to 7 may be implemented by the head wearable device 2, the body wearable device 3, the storage device 6, and the information processing terminal 7 illustrated in FIG. 2 operating in cooperation with various programs.

The functional configurations of FIGS. 5 to 7 are described below in this order. The information acquisition unit 20 in FIG. 5 includes a communication unit 21 and a position information acquisition unit 22. The position information acquisition unit 22 acquires information on a position of the user 1. The position information acquisition unit 22 performs environment recognition and position estimation based on information obtained from the peripheral camera 400, the IMU 406, the Lidar 410, the wearer-image capturing camera 412, a GPS, or the like, thereby obtaining information on the position of the user 1. The communication unit 21 performs data communication with the information processing unit 30, the projection unit 40, and the storage unit 50.

The information processing unit 30 includes a communication unit 31, a projection information acquisition unit 32, a projection destination information acquisition unit 33, and a control unit 34. Based on the information on the position of the user 1 received from the information acquisition unit 20 and information in the storage unit 50, the projection information acquisition unit 32 acquires projection information associated with the position of the user 1. The projection information is content to be projected by the projection unit 40.

The projection destination information acquisition unit 33 acquires projection destination information that is information on the projection destination 4 (where to be projected) onto which the projection information is to be projected based on the information on the position of the user 1 received from the information acquisition unit 20 and the information in the storage unit 50. The projection destination information includes, for example, position information of a projection destination and information indicating such as a shape, a material, and a color of a projection surface of the projection destination. The projection surface is a surface on which the projection information is projected. The projection destination information may be stored in the storage unit 50 in association with the projection information. In this case, the projection destination information may be associated with a plurality of projection destinations for each piece of projection information. By associating a projection destination with each piece of projection information, the projection destination information acquisition unit 33 can acquire projection information and information on the projection destination 4 suitable for the position of the user 1. In addition, when the projection destination information corresponding to the projection information is not stored in the storage unit 50, the projection destination information acquisition unit 33 may determine the projection destination 4 from Digital Twin information acquired from the storage unit 50 or the information acquired from the peripheral camera 400 or a device worn by the user 1 such as the Lidar 410, and may use the acquired information that is information on the position or the projection surface of the projection destination 4 as the projection destination information. For example, in the projection destination information stored in the storage unit 50, the projection destination 4 may not be within a range of distance available for projection performed by the projection unit 40 from the position of the user 1. In such a case, three dimensional map information stored in the storage unit 50 or information obtained from the peripheral camera 400 or a device such as the Lidar 410 may be used as the projection destination information.

The control unit 34 controls the projection unit 40 so that the projection information 5 is projected onto the projection destination 4 based on the projection information acquired by the projection information acquisition unit 32 and the projection destination information acquired by the projection destination information acquisition unit 33. The communication unit 31 performs data communication with the information acquisition unit 20, the projection unit 40, and the storage unit 50.

The projection unit 40 includes a communication unit 41, a projection image creation unit 42, and a projection processing unit 43. The projection image creation unit 42 converts the projection information received from the information processing unit 30 into an image. In addition, the projection image creation unit 42 may perform adjustment such as varying or changing a shape of an image represented by projection information that is received from the information processing unit 30 and to be projected onto the projection destination 4. The adjustment such as varying or changing a shape of the image represented by projection information includes, for example, keystone correction.

The projection image creation unit 42 may adjust the image represented by projection information according to a shape of the projection destination 4 (a shape of the projection surface) by using a known projection mapping technique, for example. Projection mapping (PJM) is a technique in which an image to be projected is varied according to a projection surface of a projected object so that the projection image appears as if the projection image is pasted onto the projection destination. In a projection mapping, a more natural projection image can be projected onto a projection destination by adjusting color and brightness of an image to be projected according to color and brightness of a projection surface. The information indicating such as a shape, a color, and brightness of the projected surface of the projection destination 4 may be acquired in a manner that the information is included in the projection destination information stored in the storage unit 50, or may be acquired in a manner that the information is included in the projection destination information using the peripheral camera 400 or the Lidar 410 worn by the user 1.

In this way, the projection information 5, which is an image, adjusted by using such a projection mapping technique is projected by the projection processing unit 43 so as to be viewed as if the image is pasted onto the projection destination 4.

The projection processing unit 43 projects the projection information 5 imaged by the projection image creation unit 42 onto the projection destination 4 received from the information processing unit 30. The communication unit 41 performs data communication with the information acquisition unit 20, the information processing unit 30, and the storage unit 50.

The storage unit 50 stores information used by the information processing system according to the present embodiment to implement display of AR information in the real world. The information used for implementing the display of the AR information in the real world includes, for example, AR information for assisting an action taken by the user 1, information on the projection destination 4 onto which the AR information is projected, a three dimensional map of surrounding environment of the user 1, and information indicating a shape or material of the projection destination 4.

The AR information may be stored in the storage unit 50 in association with the position information on the map of the surrounding environment, so that appropriate AR information can be provided to the user 1 in accordance with the position of the user 1. The information on the projection destination 4 may be stored in the storage unit 50 along with the position information on the map of the surrounding environment. The information on the projection destination 4 may be stored in the storage unit 50 in association with the AR information.

The three dimensional map of the surrounding environment of the user 1 may be three dimensional point cloud data obtained by three dimensionally measuring the surrounding environment, or may be three dimensional data including a three dimensional model created by three dimensional computer aided design (CAD), for example. When the three dimensional map is three dimensional point cloud data, information (category or tag) indicating a projection destination may be assigned to a point corresponding to the projection destination 4 in the three dimensional point cloud data. When the three dimensional map is three dimensional data, attribute information indicating a projection destination may be added to an object (a surface or a solid) in the three dimensional data. By using the three dimensional map as three dimensional point group data, actual data obtained by three dimensionally measuring the surrounding environment is available. Accordingly, the information processing system according to the present embodiment can perform self-localization by the above-described VSLAM using the three dimensional map that appropriately reflects a current state of the surrounding environment. In a case that the three dimensional map is three dimensional data created by three dimensional CAD or the like, determination of the projection destination is hardly affected by noise of three dimensional measurement.

The functional configuration illustrated in FIG. 5 is an example, and each functional unit illustrated in the information acquisition unit 20, the information processing unit 30, and the projection unit 40 may be implemented in any one of the information acquisition unit 20, the information processing unit 30, and the projection unit 40. The storage unit 50 may be included in any one of the information acquisition unit 20, the information processing unit 30, and the projection unit 40.

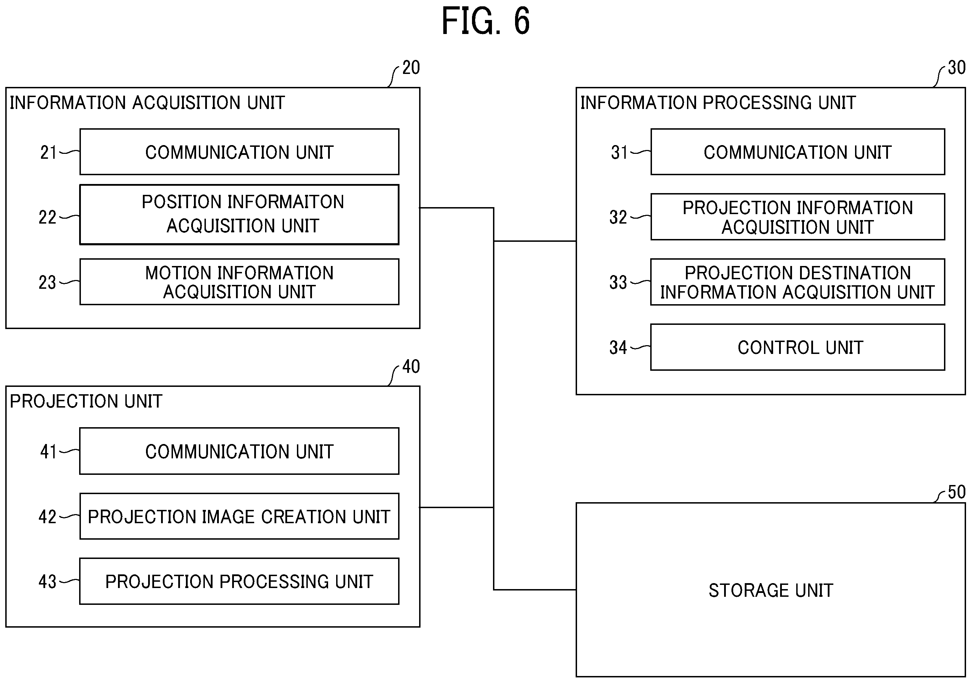

The information acquisition unit 20 of FIG. 6 includes the communication unit 21, the position information acquisition unit 22, and a motion information acquisition unit 23. The communication unit 21 and the position information acquisition unit 22 are substantially the same as the ones in FIG. 5. The motion information acquisition unit 23 acquires motion information related to at least one of a direction of the line of sight of the user 1 and motion of the user 1, and recognizes the intention of the user 1 based on the motion information.

For example, the motion information acquisition unit 23 can recognize the intention of the user 1, such as an instruction to start projecting the AR information or an instruction for the projection destination 4 in relation to the AR information, based on the motion information from which the gesture of the user 1 obtained from the peripheral camera 400, the IMU 406, or the electrooculography sensor can be recognized.

The functional configuration of the information processing unit 30 is substantially the same as that illustrated in FIG. 5. Based on the information on the intention of the user 1, the information on the position of the user 1, which are received from the information acquisition unit 20, and the information in the storage unit 50, the projection information acquisition unit 32 acquires the projection information to be projected by the projection unit 40.

The projection destination information acquisition unit 33 acquires projection destination information that is information on the projection destination 4 onto which the projection information is to be projected, based on the information on the intention of the user 1, the information on the position of the user 1, which are received from the information acquisition unit 20, and the information in the storage unit 50. The control unit 34 controls the projection unit 40 so that the projection information 5 is projected onto the projection destination 4 based on the projection information acquired by the projection information acquisition unit 32 and the projection destination information acquired by the projection destination information acquisition unit 33. The functional configuration of the projection unit 40 is substantially the same as that illustrated in FIG. 5.

The functional configuration illustrated in FIG. 6 is an example, and each functional unit illustrated in the information acquisition unit 20, the information processing unit 30, and the projection unit 40 may be implemented in any one of the information acquisition unit 20, the information processing unit 30, and the projection unit 40. The storage unit 50 may be included in any one of the information acquisition unit 20, the information processing unit 30, and the projection unit 40. The information processing system having the functional configuration illustrated in FIG. 6 can recognize the intention of the user 1 and project the AR information onto the projection destination 4 specified by the user 1.

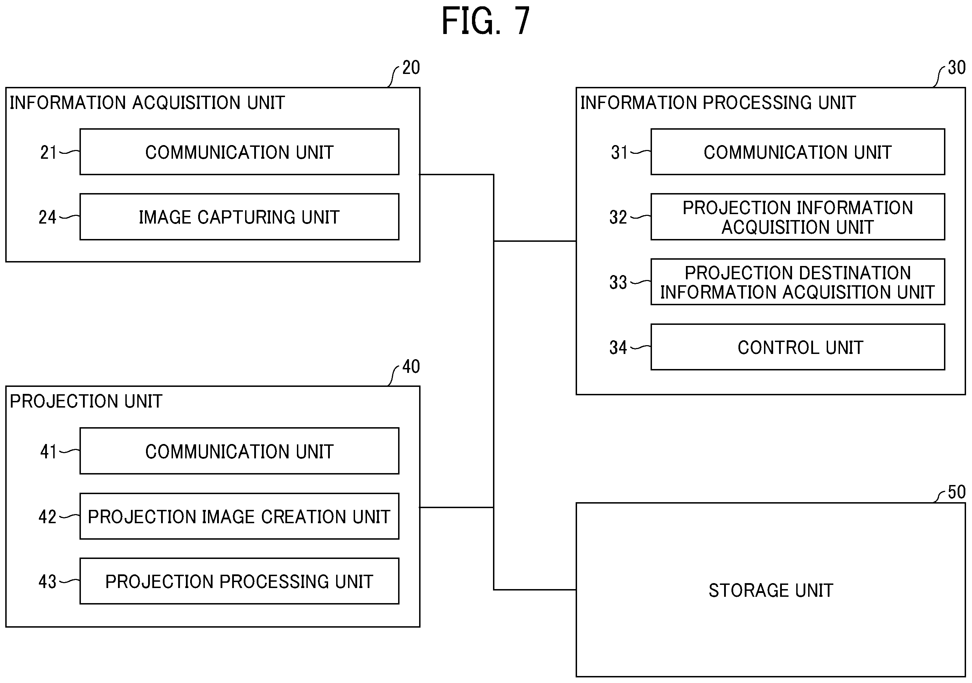

The information acquisition unit 20 of FIG. 7 includes the communication unit 21 and an image capturing unit 24. The image capturing unit 24 acquires a surrounding image of the user 1. The image capturing unit 24 can acquire a surrounding image of the user 1 that is an example of information on the position of the user 1, from the peripheral camera 400, for example. The communication unit 21 performs data communication with the information processing unit 30, the projection unit 40, and the storage unit 50.

The functional configuration of the information processing unit 30 is substantially the same as that illustrated in FIG. 5. The projection information acquisition unit 32 estimates the position of the user 1 based on the surrounding image of the user 1 received from the information acquisition unit 20 and information in the storage unit 50. The projection information acquisition unit 32 acquires projection information associated with the position of the user 1. The projection information is content to be projected by the projection unit 40. Based on the surrounding image of the user 1 received from the information acquisition unit 20, the projection destination information acquisition unit 33 acquires projection destination information related to the projection destination 4 onto which projection information is to be projected, as described below.

The control unit 34 controls the projection unit 40 so that the projection information 5 is projected onto the projection destination 4 based on the projection information acquired by the projection information acquisition unit 32 and the projection destination information acquired by the projection destination information acquisition unit 33. The communication unit 31 performs data communication with the information acquisition unit 20, the projection unit 40, and the storage unit 50.

The functional configuration of the projection unit 40 is substantially the same as that illustrated in FIG. 5. The projection image creation unit 42 converts the projection information received from the information processing unit 30 into an image. The projection processing unit 43 projects the projection information 5 imaged by the projection image creation unit 42 onto the projection destination 4 received from the information processing unit 30. The communication unit 41 performs data communication with the information acquisition unit 20, the information processing unit 30, and the storage unit 50.

The functional configuration illustrated in FIG. 7 is an example, and each functional unit illustrated in the information acquisition unit 20, the information processing unit 30, and the projection unit 40 may be implemented in any one of the information acquisition unit 20, the information processing unit 30, and the projection unit 40. The storage unit 50 may be included in any one of the information acquisition unit 20, the information processing unit 30, and the projection unit 40.

The information processing system having the functional configuration illustrated in FIG. 7 acquires the surrounding image including the AR information projected onto the projection destination 4 by the projection unit 40. Accordingly, the projection destination information acquisition unit 33 of the information processing unit 30 can evaluate the image of the AR information included in the surrounding image and project the AR information at a place where the user 1 can easily view the AR information.

The functional configurations of FIGS. 5 to 7 are examples, and a combination of the functional configurations of FIGS. 5 and 7 or a combination of the functional configurations of FIGS. 6 and 7 may be used.

### Process

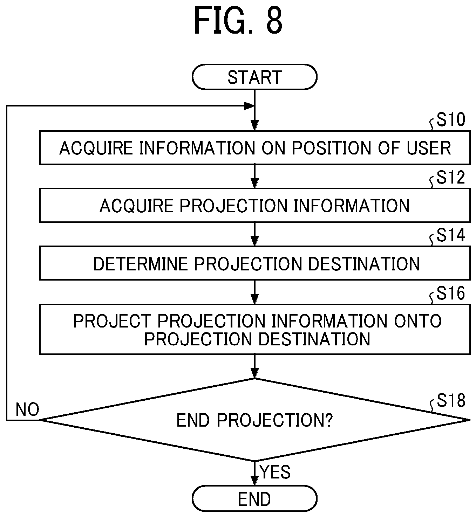

FIG. 8 is a flowchart illustrating an example of a process performed by the information processing system according to the present embodiment. In the following description, the functional configuration of FIG. 5 is used as an example. In the example of the flowchart of FIG. 8, the projection destination 4 of the AR information is specified in advance. For example, the example of the flowchart of FIG. 8 can be applied to a case where an area to which the projection information 5 (AR information) is to be projected is determined in advance, such as a case where an area on an object such as a facility or equipment around the user 1 is desired to be set to the projection destination 4, or a case where an area at or around the feet of the user 1 is desired to be set to the projection destination 4 for displaying a direction to go.

In step S10, the information acquisition unit 20 acquires information on a position of the user 1 and transmits the information on the position of the user 1 to the information processing unit 30. The information on the position of the user 1 includes information obtained from, for example, the peripheral camera 400, the IMU 406, the Lidar 410, the wearer-image capturing camera 412, or a GPS, and information obtained by performing environment recognition and position estimation from the obtained information. The information acquisition unit 20 may store information to be used for performing environment recognition and position estimation, or may acquire the information from the storage unit 50, for example. For example, the information acquisition unit 20 may acquire point cloud data serving as a three dimensional map of the surrounding environment from the storage unit 50, and perform environment recognition and position estimation by matching processing between the point cloud data and the surrounding image of the user 1.

In step S12, the information processing unit 30 acquires the AR information associated with the position of the user 1, based on the information on the position of the user 1, which is received, and the AR information associated with a position on the three dimensional map of the surrounding environment stored in the storage unit 50.

In step S14, the information processing unit 30 detects an area onto which the AR information is to be projected by detection processing based on the surrounding image obtained by the peripheral camera 400, and the Digital Twin information, and determines the projection destination 4.

In step S16, the information processing unit 30 controls the projection unit 40 based on the projection information acquired in step S12 and the projection destination 4 determined in step S14 so that the projection information 5 is projected onto the projection destination 4. The processing of steps S10 to S16 is repeated until the user 1 performs an operation to end the projecting.

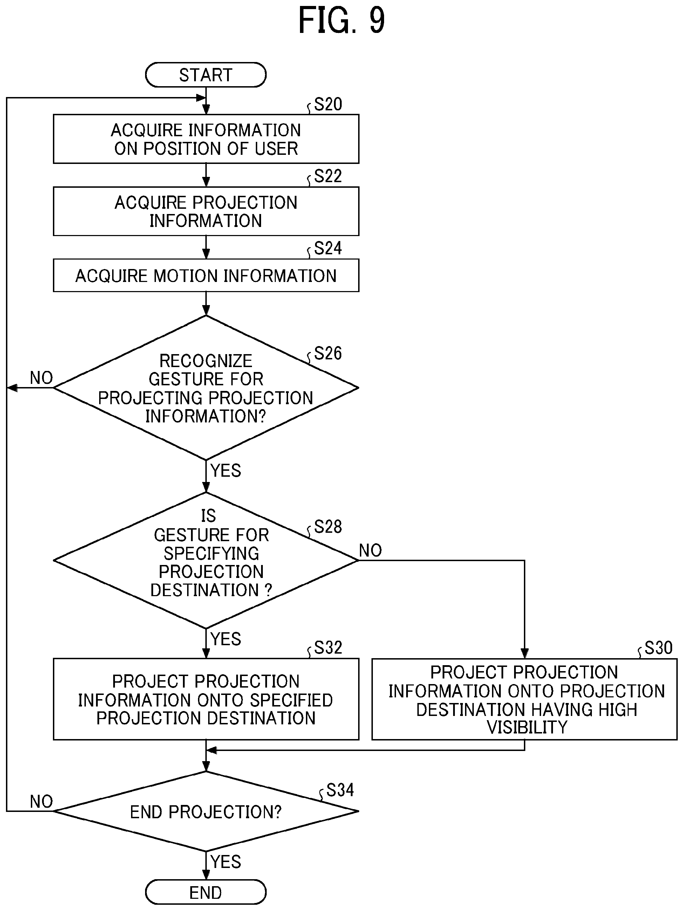

FIG. 9 is a flowchart illustrating an example of a process performed by the information processing system according to the present embodiment. In the following description, a functional configuration that is combination of the functional configuration of FIGS. 6 and 7 is used as an example. In the example of the flowchart of FIG. 9, the projection destination 4 of the AR information is not specified in advance. For example, the example of the flowchart of FIG. 9 can be applied to a case where an area to which the projection information 5 (AR information) is to be projected is not determined in advance, such as a case where the user 1 specifies the projection destination 4, or a case where a place that is easily viewed or visually recognized by the user 1 is desired to be the projection destination 4. Alternatively, the example of flowchart of FIG. 9 can be applied to a case where the information (projection destination information) on the projection destination associated with projection information is not stored in the storage unit 50, or a case wherein the projection destination within a range available to be projected by the projection unit 40 is not stored in the storage unit 50.

Since the processing of steps S20 to S22 is substantially the same as the processing of steps S10 to S12 in FIG. 8, description thereof will be omitted. In step S24, the information acquisition unit 20 acquires the motion information that is information on at least one of the direction of the line of sight of the user 1 and the motion of the user 1. In step S26, the information acquisition unit 20 performs gesture recognition based on the acquired motion information, and determines whether the user 1 has performed a gesture for projecting the projection information 5. In a case that the user 1 has not made a gesture for projecting the projection information 5, the process returns to the processing of step S20.

The gesture for projecting the projection information 5 is an example of a method by which the user 1 instructs projection of the projection information 5, and may be instructed by the direction of the line of sight of the user 1, instructed by a physical button, or instructed by voice, for example.

When the user 1 performs a gesture for projecting the projection information 5, the information acquisition unit 20 determines whether the gesture performed by the user 1 is a gesture for specifying the projection destination 4. If the gesture performed by the user 1 is a gesture for specifying the projection destination 4, the information acquisition unit 20 transmits information on the projection destination 4 specified by the user 1 to the information processing unit 30.

Note that the gesture for designating the projection destination 4 is an example of a method by which the user 1 specifies the projection destination 4, and may be specified by the direction of line of sight of the user 1, specified by a physical button, or specified by voice, for example. For example, the gesture for specifying the projection destination 4 may include an operation of holding a palm over an area to be specified as the projection destination 4, and an operation of pointing a finger to an area to be specified as the projection destination 4, for example. The method of specifying the projection destination 4 may include gazing at an area by the user 1 so that the area is specified as the projection destination 4.

After the information processing unit 30 receives the information on the projection destination 4 specified the user 1, the process proceeds to step S32. The information processing unit 30 controls the projection unit 40 so that the projection information 5 is projected onto the projection destination 4, which is specified. On the other hand, when the gesture performed by the user 1 is not a gesture for specifying the projection destination 4, the process proceeds to step S30. The information acquisition unit 20 transmits information indicating that the user 1 has not specified the projection destination 4, to the information processing unit 30. The information processing unit 30 that has received the information indicating that the user 1 has not specified the projection destination 4 controls the projection unit 40 such that the projection information 5 is projected onto the projection destination 4 having high visibility. The process from steps S20 to S34 is repeated until the user 1 performs an operation to end the projection.

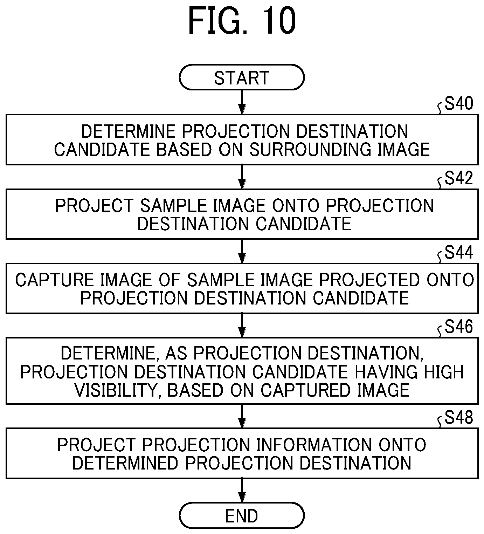

The projection destination 4 with high visibility in step S30 may be estimated based on the surrounding image of the user 1 by artificial intelligence (AI), for example. The projection destination 4 having high visibility in the step S30 may be estimated as illustrated in FIG. 10, for example.

FIG. 10 is a flowchart illustrating an example of a process of projecting projection information onto a projection destination having high visibility. In step S40, the information acquisition unit 20 determines a projection destination candidate to which a sample image is to be projected, by performing detection processing based on the surrounding image and the Digital Twin information. When an appropriate projection destination candidate is not stored in the Digital Twin information, the information acquisition unit 20 may detect a projection destination candidate based on the surrounding image or the three dimensional information detected by the Lidar 410. The information acquisition unit 20 transmits information on the determined projection destination candidate to the information processing unit 30. After the information processing unit 30 receives the information on the projection destination candidate, the process proceeds to step S42. The information processing unit 30 controls the projection unit 40 so that the sample image is projected onto the projection destination candidate.

In step S42, the projection unit 40 projects the sample image onto the projection destination candidate. In step 44, the information acquisition unit 20 captures an image of the sample image projected onto the projection destination candidate. In step S46, based on the captured image, the information acquisition unit 20 determines the projection destination candidate having high visibility in relation to the projected sample image, as the projection destination 4.

In step S48, the information processing unit 30 controls the projection unit 40 so that the projection information 5 is projected onto the projection destination 4 having high visibility and determined in step S46. Accordingly, the projection unit 40 can project the projection information 5 onto the projection destination 4 having high visibility. According to the process of the flowchart of FIG. 10, by providing feedback of a state at a time when the sample image is actually projected onto the projection destination 4, the projection destination 4 that is a suitable projection destination having high visibility is selectable from the plurality of projection destinations 4.

For example, in the present embodiment, the projection surface having high visibility does not always exist in front of the user 1, and the AR information is desired to be projected on the projection destination 4 desired by the user 1 or the projection destination 4 having high visibility according to a state of the user 1 or a surrounding situation. For example, in a construction site or a downtown street where there are many objects and of which a shape is complicated, when the projection destination 4 in front of the user 1 has properties unsuitable for projection, the user 1 may not visually recognize the projection information 5 projected. For example, a surface having such properties unsuitable for a projection includes a bright surface, a patterned surface, an uneven surface, a surface on which specular reflection occurs, a surface on which diffuse reflection hardly occurs, a surface that does not directly face the user 1, and a surface that does not have a background color such as white or black.

In addition, an example of a projection surface that has properties suitable for projection and that is easily recognized includes a dark surface, a uniform surface without a pattern, a flat surface, a surface on which specular reflection hardly occurs, a surface on which diffuse reflection easily occurs, a surface facing the user 1, and a surface having a background color such as white or black. For example, such properties of a projection surface may be estimated by referring to information registered in the Digital Twin. In addition to that, or in alternative to that, such properties of a projection surface may be estimated by performing image processing on the surrounding image captured by the peripheral camera 400. In addition to that, or in alternative to that, such properties of a projection surface may be estimated by using AI.

The information processing system according to the present embodiment may recognize the intention of the user 1 based on, for example, the motion information that is information on at least one of the direction of the line of sight and the motion of the user 1, and project a user interface (UI) of a telephone function on a palm of a hand or project on a ticket information on the ticket held by a hand. In this case, the hand of the user or the ticket held by the hand of the user is an example of the projection destination 4. When the projection destination 4 is a hand or a ticket held by the hand, the information processing unit 30 may determine the hand or the ticket as the projection destination 4 based on the information acquired by the peripheral camera 400 or the Lidar 410. In this case, the information on the projection destination is information based on detection data detected by the peripheral camera 400 or the Lidar 410.

As described above, the information processing system according to the present embodiment can project the projection information on a hand or belongings of the user 1 without using the projection destination information included in the Digital Twin information stored in the storage unit 50. As a result, the information processing system according to the present embodiment can provide suitable or appropriate information to the user 1 in a manner that the user 1 can easily view, even when Digital Twin information (which does not include information on moving objects such as people and vehicles) is not available, such as when there are many moving obstacles such as people and vehicles around the user 1.

The flowcharts of FIGS. 8 and 9 are examples. For example, whether the projection destination 4 onto which the AR information is to be projected is specified or not is determined in advance, and the process of the flowchart of FIG. 8 may be performed when the projection destination 4 is specified in advance, and the process of the flowchart of FIG. 9 may be performed when the projection destination 4 is not specified in advance.

### Example 1

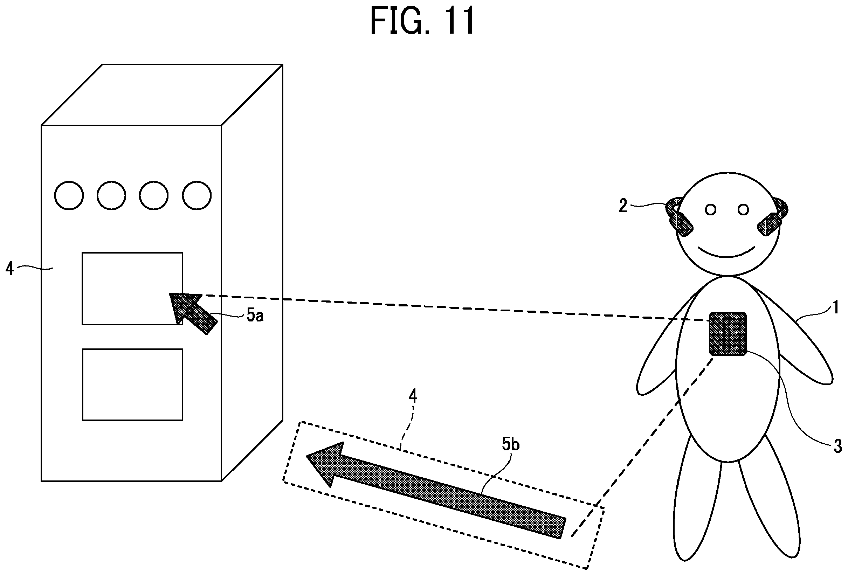

The information processing system according to the present embodiment can be used as, for example, an assist system for assisting inspection work. FIG. 11 is a diagram illustrating an example of an overview of an assist system for assisting inspection work. The user 1 who performs the inspection work wears the head wearable device 2 and the body wearable device 3 and walks, travels, around a site having an inspection spot.

The head wearable device 2 acquires information on a position of the user 1. The body wearable device 3 projects a traveling route to the inspection spot as projection information 5b at or around the feet of the user 1 based on the information on the position of the user 1. As described above, according to the assist system according to the present embodiment, the traveling route to the inspection spot can be navigated by the projection information 5b indicated by such as an arrow so that the inspection can be efficiently performed.

The body wearable device 3 projects the projection information 5a indicating an inspection point on the projection destination 4 based on the information on the position of the user 1. In addition, the body wearable device 3 can indicate the procedure of the inspection work by projecting order of the projection information 5a indicating the inspection point onto the projection destination 4. As described above, according to the assist system of the present embodiment, the inspection point can be indicated by the projection information 5a such as an arrow or the projection information 5a that is highlighted so that the user 1 can efficiently perform the inspection work.

For example, in a case of displaying AR information by AR glasses, the AR information is superimposed and displayed on a transparent display with which the information of real world is visually recognized. For this reason, in the display of the AR information by the AR glasses, the user 1 concentrates on the AR display in front of his or her eyes more than necessary, and may not notice an abnormality (abnormal sound, odor, or the like) that is usually noticed. In the assist system according to the present embodiment, displaying the AR information in the real world is implemented by projecting the projection information 5 onto the projection destination 4 in the real world. Accordingly, the AR information can be displayed without getting the attention and the line of sight of the user 1 more than necessary.

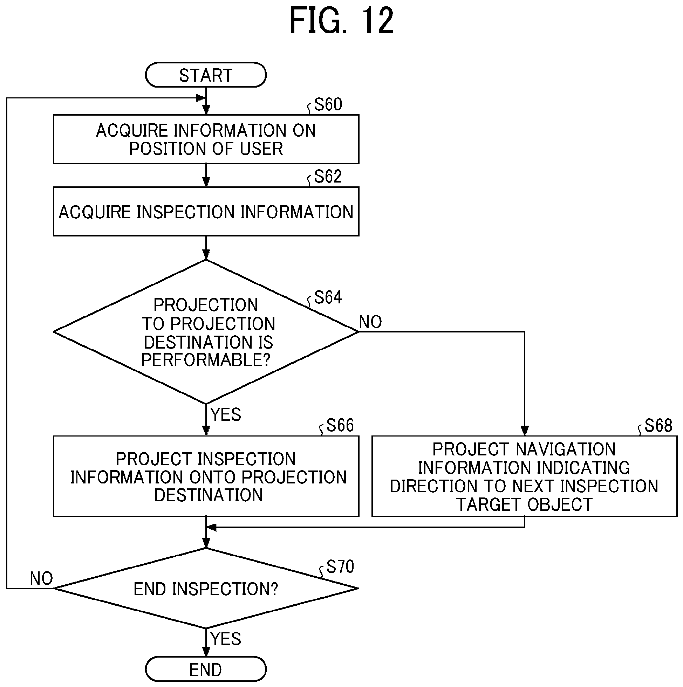

FIG. 12 is a flowchart illustrating an example of a process performed by the assist system that assists inspection work, according to the present embodiment. In the example of the flowchart of FIG. 12, the projection destination 4 of the AR information is specified in advance.

In step S60, the information acquisition unit 20 acquires information on a position of the user 1 and transmits the information on the position of the user 1 to the information processing unit 30. In step S62, the information processing unit 30 acquires inspection information associated with the position of the user 1, based on the information on the position of the user 1, which is received, and the inspection information associated with a position on the three dimensional map of the surrounding environment stored in the storage unit 50. The inspection information acquired includes point cloud data serving as a three dimensional map, position information of an inspection spot, position information of an inspection point, a check list for the inspection work, and caution information for the inspection work.

In step S64, the information processing unit 30 determines whether the distance to the inspection target object such as a facility or equipment is short and projection onto the inspection target object is performable or not, based on the received information that includes the information on the position of the user 1 and the inspection information.

When the projection onto the projection destination is performable, the process proceeds step S66. The information processing unit 30 performs detection processing based on a surrounding image obtained by the peripheral camera 400 and the inspection information to detect the inspection target object to which the projection information 5a is to be projected and the inspection point. The information processing unit 30 controls the projection unit 40 so that the projection information 5a is projected, for example, as the inspection information onto the detected inspection target object.

When the projection onto the projection destination is not performable, because the distance to the inspection target object such as a facility or equipment is far, the process proceeds step S68. The information processing unit 30 selects, for example, the projection information 5b to be projected by the projection unit 40 through by detection processing based on the surrounding image obtained by the peripheral camera 400 and the inspection information. Then, the information processing unit 30 controls the projection unit 40 so that navigation information such as the selected projection information 5b is projected. The process from steps S60 to S70 is repeated until the user 1 performs an operation to end the projection.

Although the description of the present embodiment is given as a system for assisting inspection work, the present embodiment is applicable to an assist system for assisting predetermined work. For example, the present embodiment is applicable to assist a cargo sorting operation in a logistics warehouse, and assist a product assembling operation in a manufacturing factory, for example.

### Example 2

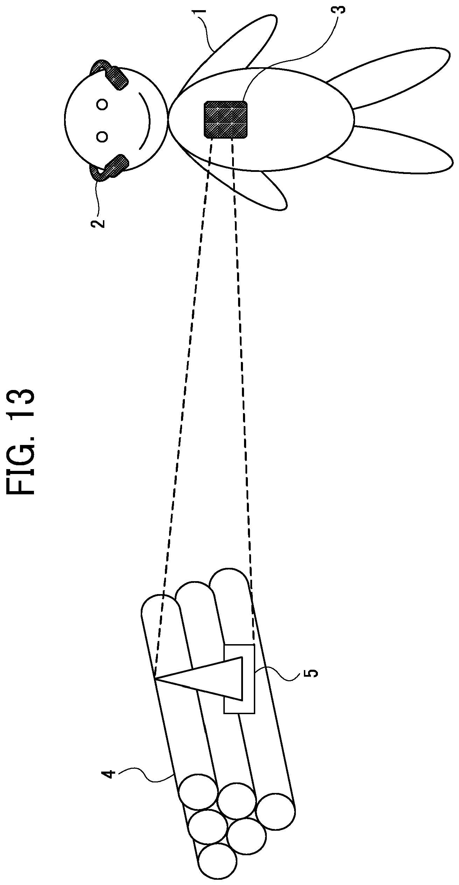

The information processing system according to the present embodiment can be utilized as, for example, an assist system for assisting an operation, a work, or a task, at a construction site. FIG. 13 is a diagram illustrating an example of an overview of an assist system for assisting an operation at a construction site. The user 1 who works at the construction site wears the head wearable device 2 and the body wearable device 3 and works at the construction site.

The head wearable device 2 acquires information on a position of the user 1. Based on information on a position of the user 1, the body wearable device 3 projects the projection information 5 indicating, for example, a dangerous place, an off-limits area, a secured area, or an object for work, in a manner that the user 1 can easily notice the information. As described above, according to the assist system according to the present embodiment, the work at the construction site can be supported.

For example, in a case of displaying AR information by AR glasses, the AR information is superimposed and displayed on a transparent display with which the information of real world is visually recognized. For this reason, in the display of the AR information by the AR glasses, the user 1 concentrates on the AR display in front of his or her eyes more than necessary, and may not notice dangerous situation (a step at the feet, an obstacle around the head, or the like) that is usually noticed. In the assist system according to the present embodiment, displaying the AR information in the real world is implemented by projecting the projection information 5 onto the projection destination 4 in the real world. Accordingly, the AR information can be displayed without getting the attention and the line of sight of the user 1 more than necessary.

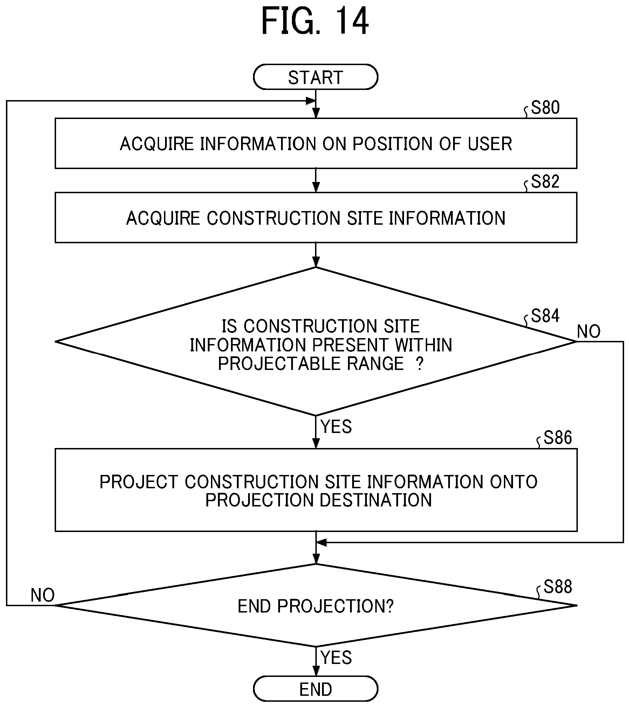

FIG. 14 is a flowchart illustrating an example of a process performed by the assist system that assists work at a construction site. In step S80, the information acquisition unit 20 acquires information on a position of the user 1 and transmits the information on the position of the user 1 to the information processing unit 30.

In step S82, the information processing unit 30 acquires construction site information associated with the position of the user 1, based on the information on the position of the user 1, which is received, and the construction site information associated with a position on the three dimensional map of the surrounding environment stored in the storage unit 50. The construction site information acquired includes point cloud data serving as a three dimensional map, position information indicating a place that is dangerous to touch, position information indicating an area with a step, position information indicating a place with an obstacle above the head, position information indicating an off-limit area, position information indicating a place secured as a space, position information indicating an object for work, information on work content, and caution information for work.

In step S84, the information processing unit 30 determines whether the construction site information is present within a projectable range, based on the received information including the information on the position of the user 1 and the construction site information. When there is the construction site information within the projectable range, the process proceeds to step S86. The information processing unit 30 performs detection processing based on a surrounding image obtained by the peripheral camera 400 and the construction site information to detect the projection destination 4 onto which the projection information 5 that is the construction site information is to be projected. For example, in the example of FIG. 13, there is a dangerous object near the user 1, and the dangerous object is detected as the projection destination 4. In addition, the detected projection destination 4 may be a place where a dangerous object is present. The information processing unit 30 controls the projection unit 40 so that the projection information 5 such as a color cone (registered trademark) or highlighted display is projected as the construction site information onto the detected projection destination 4.

On the other hand, when there is no construction site information within the projectable range, the information processing unit 30 skips the processing of step S86. The process from steps S80 to S88 is repeated until the user 1 performs an operation to end the projection.

### Example 3

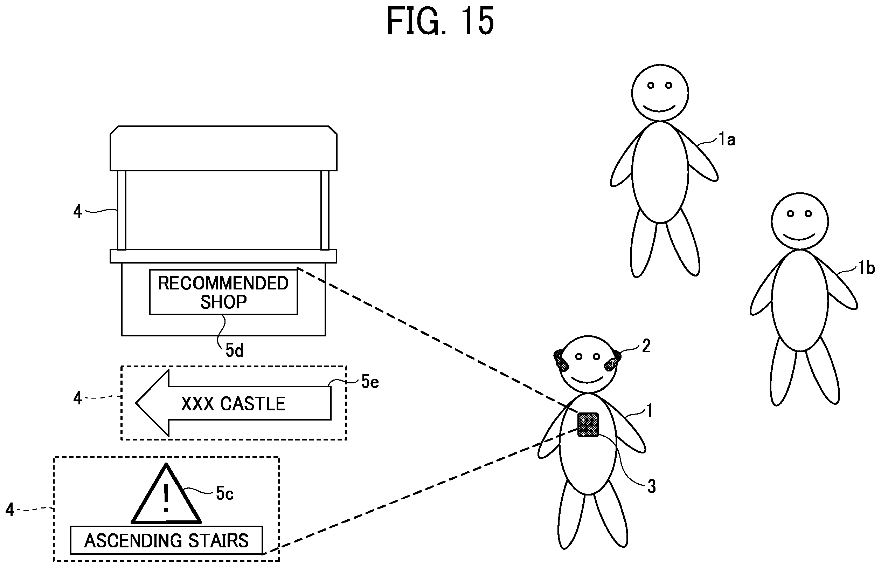

The information processing system according to the present embodiment can be used as, for example, an assist system for assisting as a guide for sightseeing. FIG. 15 is a diagram illustrating an example of an overview of an assist system as a guide for sightseeing. The user 1 who uses a sightseeing guide wears the head wearable device 2 and the body wearable device 3 to do sightseeing. A place where to do sightseeing includes a sightseeing spot, an art gallery, and a museum, for example.

The head wearable device 2 acquires information on a position of the user 1. The body wearable device 3 projects, for example, projection information 5d indicating information on a shop, projection information 5e indicating a route to a destination, and projection information 5c indicating information to be notified to the user 1, based on the information on the position of the user 1 so that the user 1 can easily notice the information. The projection information 5d is information on a sightseeing object (a building, a special produce, or the like) and projected onto the object or another object that is present near the object and is a projection destination. As described above, the assist system according to the present embodiment assists as a sightseeing guide.

For example, when AR information is displayed by AR glasses, a user who wears the AR glasses alone can visually recognize the projection information 5d, 5e, and 5c. Accordingly, in displaying the AR information by the AR glasses, the other users who are not wearing the AR glasses does not visually recognize the projection information 5d, 5e, and 5c.

In the assist system according to the present embodiment, displaying the AR information in the real world is implemented by projecting the projection information 5 onto the projection destination 4 in the real world. Accordingly, when one of the plurality of users, or a member of a group wears the assist system according to the present embodiment, all the members of the group can visually recognize the AR information displayed.

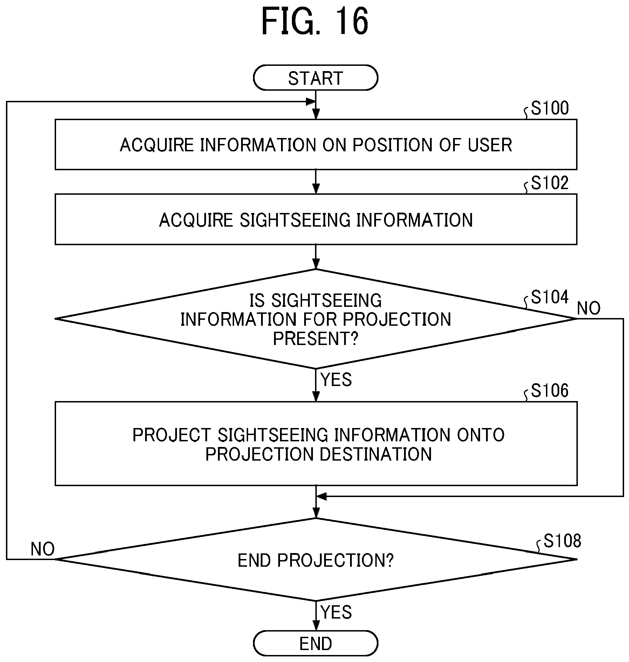

FIG. 16 is a flowchart illustrating an example of a process performed by the assist system that assists as a sightseeing guide, according to the present embodiment.

In step S 100, the information acquisition unit 20 acquires information on a position of the user 1 and transmits the information on the position of the user 1 to the information processing unit 30. In step S102, the information processing unit 30 acquires sightseeing information associated with the position of the user 1, based on the information on the position of the user 1, which is received, and the sightseeing information associated with a position on the three dimensional map of the surrounding environment stored in the storage unit 50. The sightseeing information acquired includes point cloud data serving as a three dimensional map, information on a sightseeing spot, for example
In step S104, the information processing unit 30 determines whether the sightseeing information is present within a projectable range, based on the received information including the information on the position of the user 1 and the sightseeing information. When there is the sightseeing information within the projectable range, the process proceeds to step S106. The information processing unit 30 performs detection processing based on a surrounding image obtained by the peripheral camera 400 and the sightseeing information to detect the projection destination 4 onto which the projection information 5d, 5e, and 5c, indicating the sightseeing information is to be projected.

On the other hand, when there is no sightseeing information within the projectable range, the information processing unit 30 skips the processing of step S106. The process from steps S100 to S108 is repeated until the user 1 performs an operation to end the projection.

The assist system according to the present embodiment can also be used at an educational site where AR information is desired to be shared by a plurality of users at the site, for example. For example, in a case where a class in which AR information is shared by using AR glasses at an educational site, the number of AR glasses corresponding to the number of persons participating in the class are used. According to the assist system of the present embodiment, for example, when one of the participants, for example, a teacher, wears the wearable device, all the participants in the class can visually recognize the AR information.

Each of the functions of the above-described embodiments may be implemented by one or more processing circuits or circuitry. In this specification, the "processing circuit or circuitry" in the present specification includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules designed to perform the recited functions.

The apparatuses or devices described in the above-described embodiment are merely one example of plural computing environments that implement the embodiments disclosed herein.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus, comprising:
a projection information acquisition unit (31, 2, 3, 7) configured to obtain, from a storage unit (50, 6), projection information based on information on a position of a user, the information on the position of the user being obtained by an information acquisition unit (20, 2, 3) worn by the user, the projection information being for projection by a projection unit (40, 3) worn by the user;
a projection destination information acquisition unit (33, 2, 3, 7) configured to obtain projection destination information, the projection destination information being information on a projection destination onto which the projection information is to be projected; and
a control unit (34, 2, 7) configured to cause the projection unit (40, 3) to project the projection information onto the projection destination based on the projection information and projection destination information,
**characterised in that**
the projection destination information acquisition unit (33, 2, 3, 7) is further configured to obtain the projection destination information based on motion information, the motion information being information on a direction of a line of sight of the user and obtained by a motion information acquisition unit (23, 2) worn by the user, and
wherein the projection destination information acquisition unit (33, 2, 3, 7) is further configured to obtain the projection destination information based on a surrounding image captured by an image capturing unit (24, 2) worn by the user, the surrounding image having a range at least of an omnidirectional panoramic surrounding the user.

2. The information processing apparatus of claim 1, wherein
the projection destination information acquisition unit (33, 2, 3, 7) is further configured to obtain the projection destination information based on the information on the position of the user.

3. The information processing apparatus of any one of claims 1 and 2, wherein
the projection destination information acquisition unit (33, 2, 3, 7) is further configured to obtain, from the storage unit (50, 6), the projection destination information stored in the storage unit (50, 6) in association with the projection information.

4. The information processing apparatus of any one of claims 1 to 3, wherein
the control unit (34, 2, 7) is further configured to cause at least one of the projection information to be projected by the projection unit (40, 2, 3, 6, 7) or the projection destination to be changed, based on an image obtained by the image capturing unit (24, 2, 3, 6, 7), the image including the projection destination onto which the projection information is projected.

5. The information processing apparatus of any one of claims 1 to 4, wherein
the control unit (34, 2, 7) is further configured to adjust the projection information to be projected by the projection unit (40, 3) based on a shape of a projection surface of the projection destination and information on the position of the user, the shape of the projection surface being included in the projection destination information.

6. An information processing system, comprising:
the information processing apparatus (7) of any one of claims 1 to 5; and
a wearable device (2, 3) including
the information acquisition unit (20, 2) configured to obtain the information on the position of the user, and
the projection unit (40, 3) configured to project the projection information onto the projection destination,
wherein the wearable device (2, 3) further includes the motion information acquisition unit (23, 2), and
wherein the wearable device (2, 3) further includes the image capturing unit (24, 2)

7. The information processing system of claim 6, wherein
the information processing system is an assist system that assists the user, and projection information is assist information, the assist information being information to assist the user.

8. An information processing method, comprising:
obtaining (S12, S22, S62, S82, S102) projection information from a storage unit (50, 6) based on information on a position of a user, the information on the position of the user being obtained by an information acquisition unit (20, 2, 3) worn by the user, the projection information being for projection by a projection unit (40, 3) worn by the user;
obtaining (S14, S46) projection destination information, the projection destination information being information on a projection destination onto which the projection information is projected; and
causing (S16, S30, S32, S48, S66, S68, S86, S108) the projection unit (40, 3) to project the projection information onto the projection destination based on the projection information and projection destination information, the method being **characterised by** further comprising:
obtaining the projection destination information based on motion information, the motion information being information on a direction of a line of sight of the user and obtained by a motion information acquisition unit (23, 2) worn by the user, and based on a surrounding image captured by an image capturing unit (24, 2) worn by the user, the surrounding image having a range at least of an omnidirectional panoramic surrounding the user.

## Patentansprüche

1. Informationsverarbeitungseinrichtung, umfassend:
eine Projektionsinformationserfassungseinheit (31, 2, 3, 7), die so konfiguriert ist, dass sie aus einer Speichereinheit (50, 6) Projektionsinformationen basierend auf Informationen über eine Position eines Benutzers erhält, wobei die Informationen über die Position des Benutzers von einer Informationserfassungseinheit (20, 2, 3) erhalten werden, die vom Benutzer getragen wird, und die Projektionsinformationen zur Projektion durch eine Projektionseinheit (40, 3) bestimmt sind, die vom Benutzer getragen wird;
eine Projektionszielinformationserfassungseinheit (33, 2, 3, 7), die so konfiguriert ist, dass sie Projektionszielinformationen erhält, wobei die Projektionszielinformationen Informationen über ein Projektionsziel sind, auf das die Projektionsinformationen projiziert werden sollen; und
eine Steuereinheit (34, 2, 7), die so konfiguriert ist, dass sie die Projektionseinheit (40, 3) veranlasst, die Projektionsinformationen basierend auf den Projektionsinformationen und den Projektionszielinformationen auf das Projektionsziel zu projizieren,
**dadurch gekennzeichnet, dass**
die Projektionszielinformationserfassungseinheit (33, 2, 3, 7) ferner so konfiguriert ist, dass sie die Projektionszielinformationen basierend auf Bewegungsinformationen erhält, wobei die Bewegungsinformationen Informationen über eine Richtung einer Sichtlinie des Benutzers sind und von einer Bewegungsinformationserfassungseinheit (23, 2) erhalten werden, die vom Benutzer getragen wird, und
wobei die Projektionszielinformationserfassungseinheit (33, 2, 3, 7) ferner so konfiguriert ist, dass sie die Projektionszielinformationen basierend auf einem Umgebungsbild erhält, das von einer Bildaufnahmeeinheit (24, 2) aufgenommen wird, die vom Benutzer getragen wird, wobei das Umgebungsbild einen Bereich von mindestens einem omnidirektionalen Panorama aufweist, das den Benutzer umgibt.

2. Informationsverarbeitungseinrichtung nach Anspruch 1, wobei
die Projektionszielinformationserfassungseinheit (33, 2, 3, 7) ferner so konfiguriert ist, dass sie die Projektionszielinformationen basierend auf den Informationen über die Position des Benutzers erhält.

3. Informationsverarbeitungseinrichtung nach einem der Ansprüche 1 und 2, wobei
die Projektionszielinformationserfassungseinheit (33, 2, 3, 7) ferner so konfiguriert ist, dass sie von der Speichereinheit (50, 6) die Projektionszielinformationen, die in der Speichereinheit (50, 6) gespeichert sind, in Verknüpfung mit den Projektionsinformationen erhält.

4. Informationsverarbeitungseinrichtung nach einem der Ansprüche 1 bis 3, wobei
die Steuereinheit (34, 2, 7) ferner so konfiguriert ist, dass sie mindestens eines der Projektionsinformationen, die von der Projektionseinheit (40, 2, 3, 6, 7) projiziert werden sollen, oder des Projektionsziels veranlasst, basierend auf einem Bild, das von der Bildaufnahmeeinheit (24, 2, 3, 6, 7) erhalten wird, geändert zu werden, wobei das Bild das Projektionsziel beinhaltet, auf das die Projektionsinformationen projiziert werden sollen.

5. Informationsverarbeitungseinrichtung nach einem der Ansprüche 1 bis 4, wobei
die Steuereinheit (34, 2, 7) ferner so konfiguriert ist, dass sie die von der Projektionseinheit (40, 3) zu projizierenden Projektionsinformationen basierend auf einer Form einer Projektionsfläche des Projektionsziels und Informationen über die Position des Benutzers anpasst, wobei die Form der Projektionsfläche in den Projektionszielinformationen beinhaltet ist.

6. Informationsverarbeitungssystem, umfassend:
die Informationsverarbeitungseinrichtung (7) nach einem der Ansprüche 1 bis 5; und
eine tragbare Vorrichtung (2, 3), beinhaltend
die Informationserfassungseinheit (20, 2), die so konfiguriert ist, dass sie die Informationen über die Position des Benutzers erhält, und
die Projektionseinheit (40, 3), die so konfiguriert ist, dass sie die Projektionsinformationen auf das Projektionsziel projiziert,
wobei die tragbare Vorrichtung (2, 3) ferner die Bewegungsdatenerfassungseinheit (23, 2) beinhaltet, und
wobei die tragbare Vorrichtung (2, 3) ferner die Bildaufnahmeeinheit (24, 2) beinhaltet.

7. Informationsverarbeitungssystem nach Anspruch 6, wobei
das Informationsverarbeitungssystem ein Assistenzsystem ist, das den Benutzer unterstützt, und Projektionsinformationen Assistenzinformationen sind, wobei die Assistenzinformationen Informationen sind, die den Benutzer unterstützen.

8. Informationsverarbeitungsverfahren, umfassend:
Erhalten (S12, S22, S62, S82, S102) von Projektionsinformationen aus einer Speichereinheit (50, 6), basierend auf Informationen über eine Position eines Benutzers, wobei die Informationen über die Position des Benutzers von einer Informationserfassungseinheit (20, 2, 3) erhalten werden, die vom Benutzer getragen wird, und die Projektionsinformationen zur Projektion durch eine Projektionseinheit (40, 3) bestimmt sind, die vom Benutzer getragen wird;
Erhalten (S14, S46) von Projektionszielinformationen, wobei die Projektionszielinformationen Informationen über ein Projektionsziel sind, auf das die Projektionsinformationen projiziert werden; und
Veranlassen (S16, S30, S32, S48, S66, S68, S86, S108) der Projektionseinheit (40, 3), die Projektionsinformationen basierend auf den Projektionsinformationen und den Projektionszielinformationen auf das Projektionsziel zu projizieren, wobei das Verfahren **dadurch gekennzeichnet ist, dass** es ferner umfasst
Erhalten der Projektionszielinformationen basierend auf Bewegungsinformationen, wobei die Bewegungsinformationen Informationen über eine Richtung einer Sichtlinie des Benutzers sind und von einer Bewegungsinformationserfassungseinheit (23, 2) erhalten werden, die vom Benutzer getragen wird, und auf einem Umgebungsbild basieren, das von einer Bildaufnahmeeinheit (24, 2) aufgenommen wird, die vom Benutzer getragen wird, wobei das Umgebungsbild einen Bereich von mindestens einem omnidirektionalen Panorama aufweist, das den Benutzer umgibt.

## Revendications

1. Appareil de traitement d'informations, comprenant :
une unité d'acquisition d'informations de projection (31, 2, 3, 7) configurée pour obtenir, à partir d'une unité de stockage (50, 6), des informations de projection sur la base d'informations sur une position d'un utilisateur, les informations sur la position de l'utilisateur étant obtenues par une unité d'acquisition d'informations (20, 2, 3) portée par l'utilisateur, les informations de projection étant destinées à être projetées par une unité de projection (40, 3) portée par l'utilisateur ;
une unité d'acquisition d'informations de destination de projection (33, 2, 3, 7) configurée pour obtenir des informations de destination de projection, les informations de destination de projection étant des informations sur une destination de projection sur laquelle les informations de projection doivent être projetées ; et
une unité de commande (34, 2, 7) configurée pour amener l'unité de projection (40, 3) à projeter les informations de projection sur la destination de projection sur la base des informations de projection et des informations de destination de projection,
**caractérisé en ce que**
l'unité d'acquisition d'informations de destination de projection (33, 2, 3, 7) est en outre configurée pour obtenir les informations de destination de projection sur la base d'informations de mouvement, les informations de mouvement étant des informations sur une direction d'une ligne de visée de l'utilisateur et obtenues par une unité d'acquisition d'informations de mouvement (23, 2) portée par l'utilisateur, et
dans lequel l'unité d'acquisition d'informations de destination de projection (33, 2, 3, 7) est en outre configurée pour obtenir les informations de destination de projection sur la base d'une image environnante capturée par une unité de capture d'image (24, 2) portée par l'utilisateur, l'image environnante présentant une portée au moins égale à une vue panoramique omnidirectionnelle entourant l'utilisateur.

2. Appareil de traitement d'informations selon la revendication 1, dans lequel
l'unité d'acquisition d'informations de destination de projection (33, 2, 3, 7) est en outre configurée pour obtenir les informations de destination de projection sur la base des informations sur la position de l'utilisateur.

3. Appareil de traitement d'informations selon l'une quelconque des revendications 1 et 2, dans lequel
l'unité d'acquisition d'informations de destination de projection (33, 2, 3, 7) est en outre configurée pour obtenir, à partir de l'unité de stockage (50, 6), les informations de destination de projection stockées dans l'unité de stockage (50, 6) en association avec les informations de projection.

4. Appareil de traitement d'informations selon l'une quelconque des revendications 1 à 3, dans lequel
l'unité de commande (34, 2, 7) est en outre configurée pour amener au moins l'une des informations de projection à être projetée par l'unité de projection (40, 2, 3, 6, 7) ou la destination de projection à être modifiée, sur la base d'une image obtenue par l'unité de capture d'image (24, 2, 3, 6, 7), l'image incluant la destination de projection sur laquelle les informations de projection sont projetées.

5. Appareil de traitement d'informations selon l'une quelconque des revendications 1 à 4, dans lequel
l'unité de commande (34, 2, 7) est en outre configurée pour ajuster les informations de projection à projeter par l'unité de projection (40, 3) sur la base d'une forme d'une surface de projection de la destination de projection et d'informations sur la position de l'utilisateur, la forme de la surface de projection étant incluse dans les informations de destination de projection.

6. Système de traitement d'informations, comprenant :
l'appareil de traitement d'informations (7) selon l'une quelconque des revendications 1 à 5 ; et
un dispositif portable (2, 3) incluant
l'unité d'acquisition d'informations (20, 2) configurée pour obtenir les informations sur la position de l'utilisateur, et
l'unité de projection (40, 3) configurée pour projeter les informations de projection sur la destination de projection,
dans lequel le dispositif portable (2, 3) inclut en outre l'unité d'acquisition d'informations de mouvement (23, 2), et
dans lequel le dispositif portable (2, 3) inclut en outre l'unité de capture d'image (24, 2).

7. Système de traitement d'informations selon la revendication 6, dans lequel
le système de traitement d'informations est un système d'assistance qui aide l'utilisateur, et les informations de projection sont des informations d'assistance, les informations d'assistance étant des informations destinées à aider l'utilisateur.

8. Procédé de traitement d'informations, comprenant :
l'obtention (S12, S22, S62, S82, S102) d'informations de projection à partir d'une unité de stockage (50, 6) sur la base sur la base d'informations sur une position d'un utilisateur, les informations sur la position de l'utilisateur étant obtenues par une unité d'acquisition d'informations (20, 2, 3) portée par l'utilisateur, les informations de projection étant destinées à être projetées par une unité de projection (40, 3) portée par l'utilisateur ;
l'obtention (S14, S46) d'informations de destination de projection, les informations de destination de projection étant des informations sur une destination de projection sur laquelle les informations de projection sont projetées ; et
le fait d'amener (S16, S30, S32, S48, S66, S68, S86, S108) l'unité de projection (40, 3) à projeter les informations de projection sur la destination de projection sur la base des informations de projection et des informations de destination de projection, le procédé étant **caractérisé en ce qu'**il comprend en outre
l'obtention des informations de destination de projection sur la base d'informations de mouvement, les informations de mouvement étant des informations sur une direction d'une ligne de visée de l'utilisateur et obtenues par une unité d'acquisition d'informations de mouvement (23, 2) portée par l'utilisateur, et sur la base d'une image environnante capturée par une unité de capture d'image (24, 2) portée par l'utilisateur, l'image environnante présentant une portée au moins égale à une vue panoramique omnidirectionnelle entourant l'utilisateur.
